# EUROPÄISCHE PATENTSCHRIFT

(11) **EP 2 105 381 B1**
(45) Veröffentlichungstag und Bekanntmachung des Hinweises auf die Patenterteilung: **26.10.2011**
(21) Anmeldenummer: 09156204.1
(22) Anmeldetag: 25.03.2009
(51) Int. Cl.: B65B 31/02

(54) **Verfahren und Vorrichtung zum Verpacken von Produkten in Beuteln**
Method and device for packaging products in bags
Procédé et dispositif d'emballage de produits dans des sacs

(30) Priorität: 26.03.2008 DE 102008015692
(43) Veröffentlichungstag der Anmeldung: 30.09.2009
(73) Patentinhaber: Multivac Sepp Haggenmüller GmbH & Co. KG, 87787 Wolfertschwenden (DE)
(72) Erfinder: Mößnang, Konrad, 89350 Mindelaltheim (DE)
(74) Vertreter: Grünecker, Kinkeldey, Stockmair & Schwanhäusser

(56) Entgegenhaltungen:
- EP-A- 0 398 306
- GB-A- 1 284 509
- GB-A- 2 104 472
- US-A- 5 682 727
- US-A1- 2004 139 701

## Beschreibung

Die vorliegende Erfindung bezieht sich auf ein Verfahren und eine Vorrichtung zum Verpacken von Produkten in Beuteln, insbesondere für eine Kammerbandmaschine.

Die Wirtschaftlichkeit von Maschinen hat gerade im industriellen Umfeld eine hohe Bedeutung. Dabei ist einer der wichtigsten Faktoren im Bereich der Verpackungsmaschinen die Verpackungsleistung, d.h. die Anzahl der fertig verpackten Produkte pro Zeiteinheit. Die Verpackungsleistung, auch Taktleistung genannt, kann nur in eingeschränktem Maß erhöht werden, da die einzelnen Prozessschritte hintereinander ausgeführt werden und ihre Zeitdauer nur begrenzt optimiert werden kann. Beispielsweise kann eine Vakuumkammer einer Verpackungsmaschine erst dann belüftet werden, wenn der Packstoff versiegelt und die Siegelnaht bereits abgekühlt ist, da andernfalls durch das Belüften der Vakuumkammer eine Zugkraft auf die Siegelnaht einwirken würde, was die Siegelnaht beschädigt bzw. zerstört.

Aus der US 6,862,867 B2 ist eine Vorrichtung zum Verpacken von Produkten in Beuteln mit einer Vakuumkammer, einer Siegelunterstützvorrichtung, einer Siegelschiene und zwei Kühlplatten zum Kühlen des Bereichs um die Siegelnaht bekannt.

Die GB 1 284 509 A zeigt eine Vakuumverpackungsmaschine, in der ein Klemmwerkzeug den Hals eines Beutels festlegt, sodass die frisch versiegelte Kante beim Belüften der Kammer geringer belastet wird.

Die US 2004/0139701 A1 zeigt eine Vakuumverpackungsmaschine, bei der Kühlplatten eingesetzt werden, um den Hals eines Beutels während eines Versiegelungsvorgangs zu halten.

Die US 5,682,727 A offenbart eine Vakuumverpackungsmaschine, in deren Deckel eine Kombination aus Schneidklinge und Versiegelungswerkzeug an einem Hebelmechanismus angebracht sind, der bei geschlossener Kammer zunächst abgesenkt wird, um Schlitze in einen Beutel zu schneiden, und nachdem die verbleibende Luft aus dem Beutel evakuiert wurde, ein zweites Mal abgesenkt wird um den Beutelhals zu versiegeln.

Die Aufgabe der vorliegenden Erfindung ist es, ausgehend vom Stand der Technik gemäß GB 1284509oder US 2004/0139701A1, ein Verfahren und eine Vorrichtung bereitzusteilen, das/die es ermöglicht, die Taktleistung der Verpackungsmaschine zu erhöhen.

Die Aufgabe wird gelöst durch ein Verfahren gemäß Anspruch 1 und eine Vorrichtung gemäß Anspruch 11. Weiterbildungen der Erfindung sind in den Unteransprüchen angegeben.

Durch das Einklemmen bzw. das luftdichte Verschließen eines bereits befüllten evakuierten und zu versiegelnden Beutels mit Hilfe von mindestens einer Klemmschiene während des Siegelvorgangs, wird die auf die Siegelnaht wirkende Zugkraft beim Belüften der evakuierten Kammer der Verpackungsmaschine, auf ein Minimum reduziert. Auf diese Weise ist es ausgeschlossen, dass die noch erhitzte und daher deformierbare Siegelnaht durch die frühe Belüftung der Kammer beschädigt bzw. zerstört wird. Durch die einströmende Luft in die Kammer wird das Abkühlen der Siegelnaht begünstigt. Durch die Parallelisierung der Prozessschritte "Siegeln" und "Belüften" kann die Verpackungsleistung der Verpackungsmaschine erhöht werden. Alternativ hierzu könnte bei gleich bleibender Taktzahl eine kleinere und somit kostengünstigere Vakuumpumpe verwendet werden, da für die Evakuierung bei gleich bleibender Taktzahl durch die Parallelisierung der Prozessschritte "Siegeln" und "Belüften" mehr Zeit zur Verfügung steht.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht eines Teils einer Kammerbandmaschine;
- Fig. 2: eine schematische Schnittansicht eines Teils einer Verpackungsmaschine im Bereich der Sie- gelschiene;
- Fig. 3a): eine schematische Schnittansicht eines Teils der Verpackungsmaschine vor dem Schließen des Deckels;
- Fig. 3b): eine schematische Schnittansicht eines Teils der Verpackungsmaschine beim Schlitzen des Beu- tels;
- Fig. 3c): eine schematische Schnittansicht eines Teils der Verpackungsmaschine beim Evakuieren der Kammer;
- Fig. 3d): eine schematische Schnittansicht eines Teils der Verpackungsmaschine beim Schneiden, Sie- geln, Belüften der Kammer;
- Fig. 3e): eine schematische Schnittansicht eines Teils der Verpackungsmaschine vor der Öffnung des De- ckels;
- Fig. 4a): eine schematische Schnittansicht einer Klemm- schiene in einer ersten Ausführungsform;
- Fig. 4b): eine schematische Schnittansicht einer Klemm- schiene in einer zweiten Ausführungsform

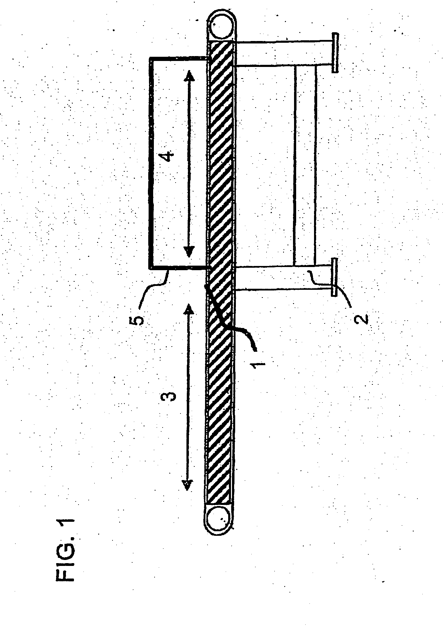

Im Folgenden wird mit Bezug auf die Figuren 1 bis 4a) eine erste Ausführungsform der vorliegenden Erfindung beispielhaft an einer Kammerbandmaschihe beschrieben. In der vorliegenden Ausführungsform ist die Kammerbandmaschine als automatische Kammerbandmaschine ausgebildet.

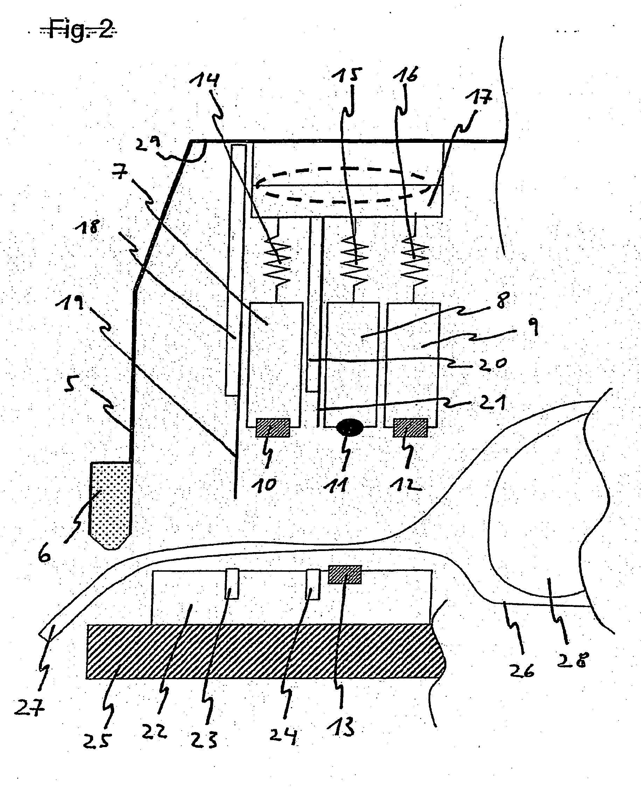

Fig. 1 zeigt eine schematische Ansicht einer Kammerbandmaschine mit einem Förderband 1, einem Gestell 2, einem Auflegebereich 3, einer Kammer 4, und einem Deckel 5. Die Kammer 4 wird durch den Deckel 5 zusammen mit einem Unterteil 25 (siehe Fig. 2) gebildet, wobei sich der Deckel 5 beispielsweise motorisch betrieben automatisch öffnet oder manuell öffnen lässt, um beispielsweise zu evakuierende bzw. zu versiegelnde Beutel 26 aufzunehmen, die durch das Fröderband 1 automatisch zugeführt werden, und der sich anschließend automatisch schließt, um die Kammer 4 zu bilden.

Fig. 2 zeigt einen Ausschnitt der Kainmerbandmaschine. Der Deckel 5 ist an seinem unteren Rand mit einer umlaufenden Deckeldichtung 6 versehen, um beim Absenken des Deckels 5 zu gewährleisten, dass der Deckel 5 bzw. die Deckeldichtung 6 beim Schließen des Deckels 5 zusammen mit dem Unterteil 25 die luftdichte Kammer 4 bildet. Auf der Innenseite einer Deckfläche 29 des Deckels 5 ist ein Aufnahmeblock 17 vorgesehen. Der Aufnahmeblock 17 ist relativ zum Deckel 5 absenkbar. An der Unterseite des Aufnahmeblocks 17 sind ein erstes, ein zweites und ein drittes Federelement 14, 15, 16 vorgesehen. An dem ersten Federelement 14 ist eine erste Klemmschienenaufnahme 7, an dem zweiten Federelement 15 eine Siegelschienenaufnahme 8 und an dem dritten Federelement 16 eine zweite Klemmschienenaufnahme 9 vorgesehen. An der Unterseite der ersten Klemmschienenaufnahme 7 ist eine erste Klemmschiene 10, an der Unterseite der Siegelschienenaufnahme 8 eine Siegelschiene 11 und an der Unterseite der zweiten Klemmschienenaufnahme 9 eine zweite Klemmschiene 12 vorgesehen. Die erste und zweite Klemmschienenaufnahme 7, 9, die erste und zweite Klemmschiene 10,12 sowie die Siegeischienenaufnahme 8 und die Siegelschiene 11 erstrecken sich über die gesamte Beutelbreite in die Zeichenebene hinein bzw. aus ihr heraus. Beim Schließen des Deckels 5 kommen die erste Klemmschiene 10 und die zweite Klemmschiene 12 in Kontakt mit einer Widerlageraufnahme 22. Die Siegelschiene 11 kommt hierbei in Kontakt mit einem Siegelschienen-Widerlager 13, das in die Widerlageraufnahme eingelassen ist. Die Widerlageraufnahme 22 ist in der Kammer 4 vorgesehen und erstreckt sich zusammen mit dem Siegelschienenwiderlager 13 über die gesamte Beutel breite in die Zeichenebene hinein bzw. aus ihr heraus.

Am Deckel 5 ist eine erste Messeraufnahme 18 vorgesehen, die ein erstes Messer 19 auf weist. Das erste Messer 19 ist so lang, dass es bereits beim Schließen des Deckels 5 den Beutel 26 schneiden bzw. schlitzen kann. Durch das Schlitzen des Beutels 26, kann dieser evakuiert und beispielsweise begast oder mit Produktzusätzen wie Lake oder Öl versehen werden. Der Aufnahmeblock 17 weist eine zweite Messeraufnahme 20 auf, an der ein zweites Messer 21 vorgesehen ist. Die Messeraufnahmen 18, 20 und die Messer 19, 21 erstrecken sich über die gesamte Beutelbreite in die Zeichenebene hinein bzw. aus ihr heraus. Die Messer 19, 21 sind nicht auf eine einteilige Form beschränkt. Vielmehr können eine Mehrzahl von Messern vorgesehen sein, die den Beutel 26 schneiden bzw. schlitzen können. Die zweite Messeraufnahme 20 bzw. das zweite Messer 21 ist zwischen der ersten Klemmschienenaufnahme 7 und der Siegelschienenaufnahme 8 vorgesehen. Die Widerlageraufnahme 22 ist mit zwei Messerschlitzen 23, 24 versehen, in die die Messer 19, 21 zum Schneiden eintauchen.

In der Kammer 4 befindet sich ein Beutel 26, in dem sich ein Produkt 28 befindet und dessen Beutelhäls 27 sich in Fig. 2 nach links aus der Kammer 4 hinaus erstreckt. Der Beutel 26 ist so angeordnet, dass sich der Beutelhals 27 im Wesentlichen zwischen der ersten und der zweiten Klemmschienenaufnahme 7, 9 bzw. der Siegelschienenaufnahme 8 und der Widerlageraufnahms 22 befindet.

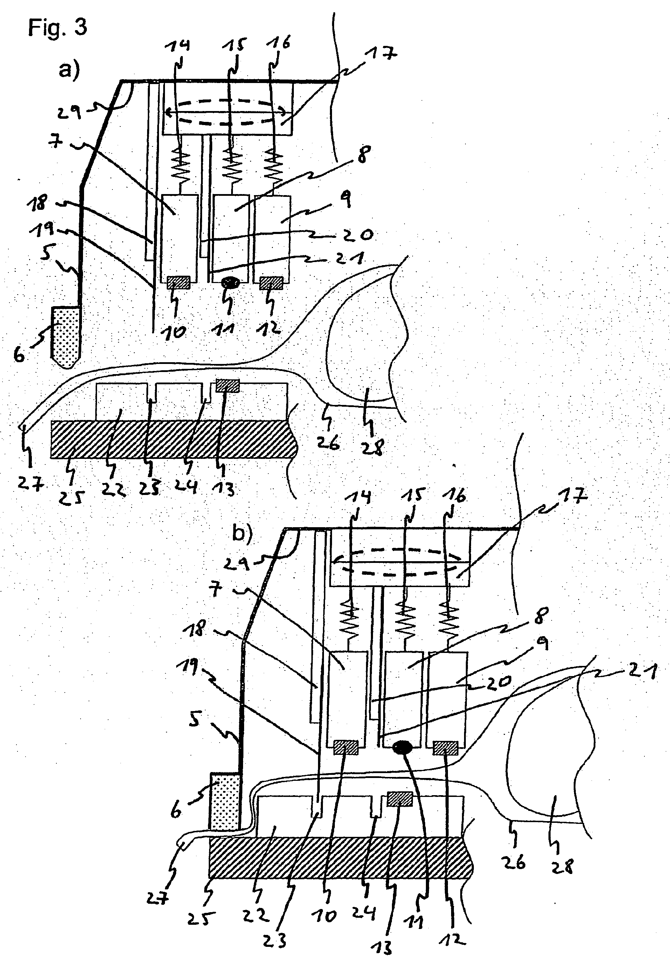

In Fig. 3a) bis e) ist der Betrieb der erfindungsgemäßen Vorwichtung bzw. das erfindüngsgemäße Verfähren gezeigt. Das Verfahren weist die folgenden Schritte auf:

Wie in Fig. 3a) gezeigt ist (siehe auch Fig. 2), wird der befüllte und noch nicht versiegelte Beutel 26 in der Kammer 4 zwischen der ersten und der zweiten Klemmschienenciufnahme 7, 9 bzw. der Siegelschiehenaufnahme 8 und der Widerlageraufnahme 22 platziert. Der Deckel 5 befindet sich in einer angehobenen Position.

Anschließend wird, wie in Fig. 3b) gezeigt ist, der Deckel 5 geschlossen. Der Deckel 5 bildet zusammen mit dem Unterteil 25 die Kammer 4. Beim Absenken des Deckels 5 wird mit dem Deckel 5 zusammen die erste Messeraufnahme 18 bzw. das erste Messer 19 abgesenkt und schlitzt den Beutel 26 im produktfernen Bereich des Beutelhalses 27. Das erste Messer 19 wirkt mit dem ersten. Messerschlitz 23 zusammen.

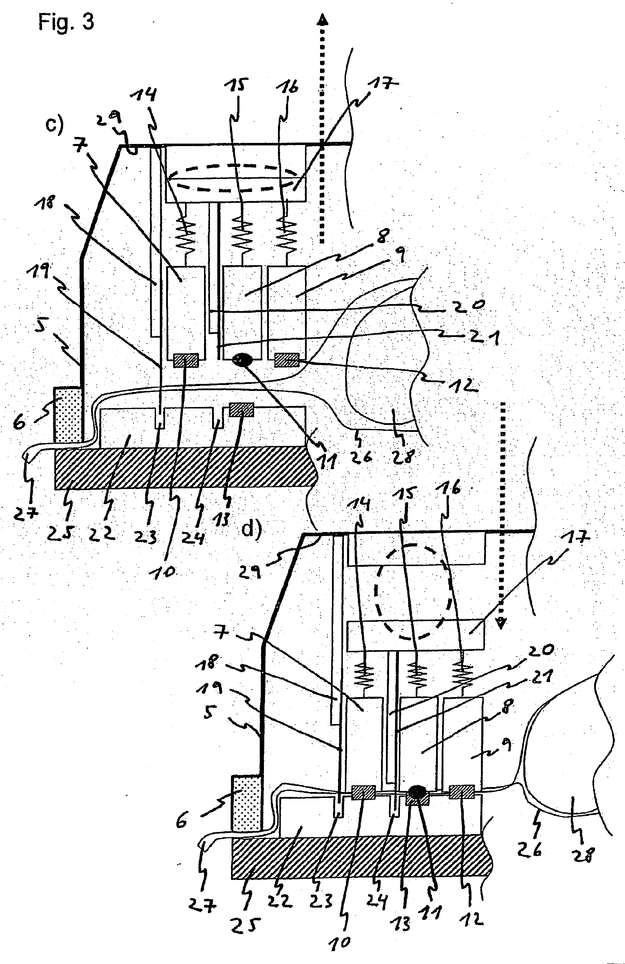

Wie in Fig. 3c) gezeigt ist, wird die Kammer 4 dann mit Hilfe von mindestens einer Vakuumpumpe evakuiert (gestrichelte Linie). Es ist z. B. auch denkbar, dass statt einer integrierten Vakuumpumpe in oder an der Maschine eine zentrale Vakuumanlage vorgesehen ist.

Wie in Fig. 3d) gezeigt ist, wird dann der Aufnahmeblock 17 durch eine mechanische Vorrichtung relativ zum Deckel 5 abgesenkt. Mit dem Aufnahmeblock 17 werden auch die erste Klemmschienenaufnahme 7 bzw. die ersten Klemmschiene 10, die Siegelschienenaufnahme 8 bzw. die Siegelschiehe 11 und die zweite Klemmschienehaufnahme 9 bzw. die zweite Klemmschiene 12 abgesenkt. Der Beutel 26 wird gleichzeitig durch die beiden Klemmschienen 10,12 fixiert, durch die Siegelschiene 11 versiegelt und durch die Absenkung der zweiten Messeraufnahme 20 bzw. des zweiten Messers 21 heben der Siegelnaht geschnitten. Eine oder beide Klemmschienen 10, 12 können z.B. auch derart ausgebildet sein, dass sie den Beutel 26 klemmen und luftdicht verschließen. Das zweite Messer 21 wirkt mit dem zweiten Messerschlitz 24 zusammen. Gleichzeitig wird die Kammer 4 belüftet (gestrichelte Linie). Im belüfteten Zustand der Kammer 4 legt sich die Beutelfolie weitgehend an das Produkt 28 an, wodurch Zugkräfte auf die noch warme und deformierbare Siegelnaht wirken. Durch die beiden Klemmschienen 10, 12, die den Beutel 26 fixieren, werden diese Zugkräfte minimiert. Die Siegelnaht kann, zusätzlich durch die einströmende Luft begünstigt, abkühlen und aushärten ohne beschädigt bzw. zerstört zu werden. Auf diese Weise ist eine gasdichte Verriegelung des Heutels 26 gewährleistet. Durch die einströmende Luft steigt der Druck in der Kammer 4, wodurch sich die Beutelfolie vollständig an das Produkt 28 anliegt.

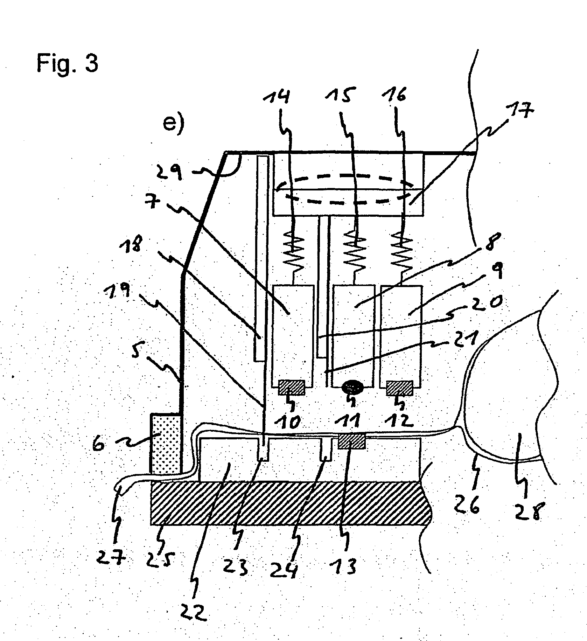

Wie in Fig. 3e) gezeigt ist, wird der Aufnahmeblock 17 und mit ihm die Siegelschiene 11 sowie die erste und zweite Klemmschiene 10, 12 und das zweite Messer 21 wieder in die Ausgangsposition in Fig. 3a) zurückbewegt. Der Beutel 26 bzw. der abgeschnittene Beutelhals 27 können nun entnommen werden. Es ist denkbar die Siegelschiene 11, die beiden Klemmschienen 10, 12 und das zweite Messer 21 gleichzeitig anzuheben. Es ist aber auch möglich die Siegelschiene 11 in diesem Schritt zuerst anzuheben, um eine eventuell angeklebte Beutelfolie durch die andauernde Fixierung der beiden Klemmschienen 10, 12 abzusteifen. Danach werden die beiden Klemmschienen 10, 12 gangehoben.

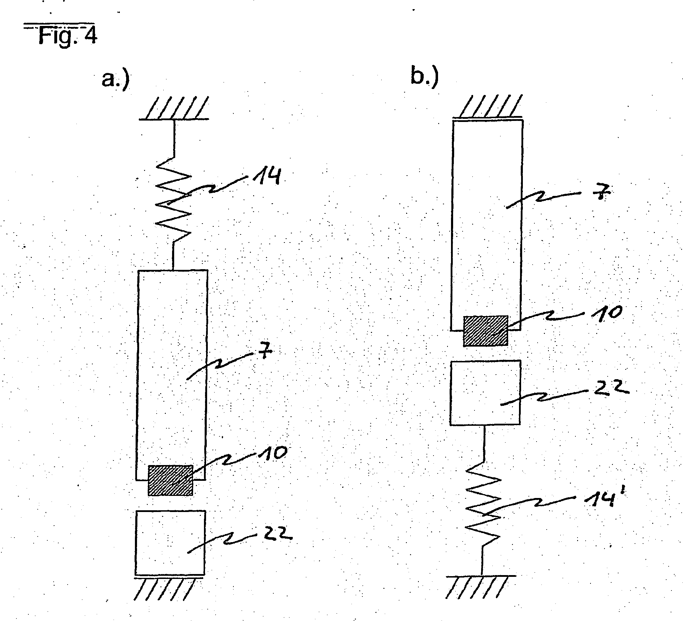

Fig. 4a) zeigt die erste Klemmschienenaufnahme 7 mit der ersten Klemmscthiene 10 in einer schematischen Schhittanjgicht. Die erste Kleaimschienenaufnahme 7 ist, wie bereits in den Figuren. 2, 3a) bis e) gezeigt, mit einem ersten Federelement 14 versehen. Auf diese Weise kann sich die erste Klemmschiene 10 eventuellen Unebenhiten der Beutelfolie und eventuellen Toleranzen der Widerlägeraufnahme 22 anpassen und so gleichmäßigen Druck auf bauen. Dadurch wird eine luftdichte Abrichtung des Beutels 26 durch die Klemmschienen 10, 12 gewährleistet. Din zweite Klemmschiehenauf nähme 9 mit der zweiten Klemmschiene 12 und die Siegelschienehaufnahms 8 mit der Siegelschiene 11 sind in gleicher Weise federnd gelagert. Durch diese Art der Lagerung bei der Siegelschienenaufnahme 8 wird ein gleichmäßige Siegeldruck über die gesamte Beutelbreite gewährleistet, was für die Qualität der Siegelnaht bzw. für eine sichere Versiegelung von. Vorteil ist.

Fig. 4b) zeigt eine zweite Ausführungsform der Art der Lagerung der ersten Klemmschienenaufnahme 7. Die erste Klemntschienenaufriahme 7 mit der ersten Klenumchiene 10 ist ohne Federung ausgebildet. Allerdings ist die Widerlageraufnahme 22 mit einem Federelement 14' versehen. Durch diese Anordnung werden die oben bereits beschriebenen Effekte für die erste und zweite Klemmschiene 10, 12 und die Siegelschiene 11 erreicht.

Die Form des Deckels ist nicht auf die gezeigte Form beschränkt. Der Deckel kann beispielsweise auch die Form einer hohlen Halbkugel oder eine andere beliebige Form aufweisen. Ebenso ist die Anordnung der Klemmschienen bzw. der Siegelschiene nicht auf die gezeigte Form beschränkt. Es kann beispielsweise nur eine Klemmschienenaufnahme mit einer Klemmschiene vorgesehen sein, die neben der Siegelschienenaufnahme bzw. der Siegelschiene angeordnet ist.

Es ist auch denkbar mehrere Beutel gleichzeitig in der Kammer abzufertigen. Weiterhin ist es denkbar nur eine Messeraufnahme mit einem Messer vorzusehen. Es können auch auf andere Weise Öffnungen im Beutel erzeugt werden, z.B. durch Stanzen.

Es ist weiterhin denkbar die Siegelschienenaufnahme und die Klemmschienenaufnahme ungefedert zu lagern. Die Genauigkeit der Schienen sollte dementsprechend hoch sein.

Die beschriebene Federung mit Hilfe der Federelemente ist nicht auf Federn beschränkt. Vielmehr ist auch der Einsatz von elastischen Kunststoffelementen oder ähnlichem denkbar.

Die Erfindung ist ferner auch nicht auf die Anwendung in einer Kammerbandmaschine beschränkt. Sie ist auch auf eine Kammermaschine ohne Förderband anwendbar.

## Patentansprüche

1. Verfahren zum Verpacken von Produkten (28) in Beuteln (26), das die Schritte aufweist:
a.) Bilden einer Kammer (4) um den Beutel (26), durch Schließen eines Deckels (5);
b.) Evakuieren der Kammer (4);
c.) gleichzeitiges Siegeln des Beutels (26) durch eine Siegelschiene (11) und Belüften der Kammer (4),
**dadurch gekennzeichnet, dass**
der Beutel (26) beim Schließen des Deckels (5) durch ein erstes Messer (19) geschlitzt wird.

2. Verfahren gemäß Anspruch 1, **dadurch gekennzeichnet, dass** vor Schritt b.) Öffnungen im Beutel (26) erzeugt werden.

3. Verfahren gemäß Anspruch 1 oder 2, **dadurch gekennzeichnet, dass** der Beutel (26) bei Schritt c.) gleichzeitig oder danach durch ein zweites Messer (21) geschnitten wird.

4. Verfahren gemäß einem der Ansprüche 1 bis 3, **dadurch gekennzeichnet, dass** der Beutel (26) bei Schritt c.) durch eine erste Klemmschiene (10, 12) geklemmt wird.

5. Verfahren gemäß Anspruch 4, **dadurch gekennzeichnet, dass** der Beutel (26) von der ersten Klemmschiene (10, 12) und einer zweiten Klemmschiene(10, 12) geklemmt wird, wobei die Siegelschiene (11) zwischen der ersten Klemmschiene (10, 12) und der zweiten Klemmschiene (10, 12) angeordnet ist.

6. Verfahren gemäß Anspruch 4 oder 5, **dadurch gekennzeichnet, dass** die erste und/oder die zweite Klemmschiene (10, 12) derart ausgebildet sind/ist, dass der Beutel (26) durch Absenken der ersten und/oder der zweiten Klemmschiene (10, 12) luftdicht verschlossen werden kann.

7. Verfahren gemäß einem der Ansprüche 4 bis 6, **dadurch gekennzeichnet, dass** die erste Klemmschiene (10, 12), die zweite Klemmschiene (10, 12) und/oder die Siegelschiene (11) und/oder ein jeweiliges Widerlager federnd gelagert sind.

8. Verfahren gemäß einem der Ansprüche 4 bis 6, **dadurch gekennzeichnet, dass** die erste Klemmschiene (10, 12), die zweite Klemmschiene (10, 12) und/oder die Siegelschiene (11) und/oder ein jeweiliges Widedager starr gelagert sind.

9. Verfahren gemäß einem der Ansprüche 4 bis 8, **dadurch gekennzeichnet, dass** die Siegelschiene (11) und die erste und/oder die zweite Klemmschiene (10, 12) gemeinsam abgesenkt und/oder angehoben werden können.

10. Verfahren gemäß einem der Ansprüche 4 bis 8, **dadurch gekennzeichnet, dass** die Siegelschiene (11) vor der ersten und/oder der zweiten Klemmschiene (10, 12) angehoben wird.

11. Vorrichtung zum Verpacken von Produkten (28) in Beuteln (26) mit einem Deckel (5), der zusammen mit einem Unterteil (25) eine Kammer (4) bildet und mit einer Siegelschiene (11) zum Siegeln des Beutels (26),
wobei zumindest eine erste Klemmschiene (10, 12) vorgesehen ist, die derart ausgebildet ist, dass der Beutel (26) während dem Siegeln klemmbar ist,
**dadurch gekennzeichnet, dass**
ein erstes Messer (19) zusammen mit dem Deckel (5) zum Schlitzen des Beutels (26) absenkbar und anhebbar ist.

12. Vorrichtung gemäß Anspruch 11, **dadurch gekennzeichnet, dass** eine zweite Klemmschiene (10, 12) vorgesehen ist, wobei die Siegelschiene (11) zwischen der ersten und der zweiten Klemmschiene (10, 12) angeordnet ist.

13. Vorrichtung gemäß Anspruch 11 oder 12, **dadurch gekennzeichnet, dass** ein zweites Messer (21) zusammen mit der ersten und/oder der zweiten Klemmschiene (10, 12) und der Siegelschiene (11) absenkbar und anhebbar ist.

## Claims

1. A method of packaging products (28) in bags (26), which has the steps of:
a) forming a chamber (4) around the bag (26) by closing a cover (5);
b) evacuating the chamber (4);
c) simultaneous sealing of the bag (26) by a sealing rail (11) and ventilation of the chamber (4),
**characterised in that**
upon closure of the cover (5) the bag (26) is cut by a first cutter (19) .

2. A method according to Claim 1, **characterised in that** before step b) openings are created in the bag (26).

3. A method according to Claim 1 or 2, **characterised in that** the bag (26) in step c) is cut simultaneously or thereafter by a second cutter (21).

4. A method according to any one of Claims 1 to 3, **characterised in that** the bag (26) in step c) is clamped by a first clamping rail (10, 12) .

5. A method according to Claim 4, **characterised in that** the bag (26) is clamped by the first clamping rail (10,12) and a second clamping rail (10,12), wherein the sealing rail (11) is arranged between the first clamping rail (10,12) and the second clamping rail (10,12).

6. A method according to Claim 4 or 5, **characterised in that** the first clamping rail and/or second clamping rail (10,12) is/are so formed that the bag (26) can be sealed airtightly by lowering the first clamping rail and/or second clamping rail (10,12).

7. A method according to any one of Claims 4 to 6, **characterised in that** the first clamping rail (10,12), the second clamping rail (10,12) and/or the sealing rail (11) and/or a respective abutment are spring-mounted.

8. A method according to any one of Claims 4 to 6, **characterised in that** the first clamping rail (10,12), the second clamping rail (10,12) and/or the sealing rail (11) and/or a respective abutment are rigidly mounted.

9. A method according to any one of Claims 4 to 8, **characterised in that** the sealing rail (11) and the first clamping rail and/or the second clamping rail (10,12) can be lowered and/or raised together.

10. A method according to any one of Claims 4 to 8, **characterised in that** the sealing rail (11) is raised before the first clamping rail and/or the second clamping rail (10,12).

11. An apparatus for packaging products (28) in bags (26) with a cover (5), which together with a lower part (25) forms a chamber (4), and with a sealing rail (11) for sealing the bag (26),
wherein at least one first clamping rail (10,12) is provided which is so formed that the bag (26) can be clamped during the sealing, **characterised in that**
a first cutter (19) can be raised and lowered together with the cover (5) for the cutting of the bag (26).

12. An apparatus according to Claim 11 , **characterised in that** a second clamping rail (10,12) is provided, wherein the sealing rail (11) is disposed between the first clamping rail and the second clamping rail (10,12).

13. An apparatus according to Claim 11 or 12, **characterised in that** a second cutter (21) can be lowered and raised together with the first clamping rail and/or the second clamping rail (10,12) and the sealing rail (11).

## Revendications

1. Procédé pour emballer des produits (28) dans des sachets (26), qui comporte les étapes consistant :
a.) à former une chambre (4) autour du sachet (26) en fermant un couvercle (5) ;
b.) à faire le vide dans la chambre (4) ;
c.) à sceller en même temps le sachet (26) grâce à une barre de scellage (11), et à aérer la chambre (4),
**caractérisé en ce que** le sachet (26), lors de la fermeture du couvercle (5), est fendu par une première lame (19) .

2. Procédé selon la revendication 1, **caractérisé en ce que**, avant l'étape b.), des ouvertures sont réalisées dans le sachet (26).

3. Procédé selon la revendication 1 ou 2, **caractérisé en ce que** le sachet (26), lors de l'étape c.), est coupé simultanément ou ultérieurement par une seconde lame (21).

4. Procédé selon l'une des revendications 1 à 3, **caractérisé en ce que** le sachet (26), lors de l'étape c.), est serré par une première barre de serrage (10, 12).

5. Procédé selon la revendication 4, **caractérisé en ce que** le sachet (26) est serré par la première barre de serrage (10, 12) et par une seconde barre de serrage (10, 12), la barre de scellage (11) étant disposée entre la première barre de serrage (10, 12) et la seconde barre de serrage (10, 12).

6. Procédé selon la revendication 4 ou 5, **caractérisé en ce que** les première et/ou seconde barres de serrage (10, 12) sont conçues de telle sorte que le sachet (26) puisse être fermé de manière étanche à l'air par abaissement de la première et/ou seconde barre de serrage (10, 12).

7. Procédé selon l'une des revendications 4 à 6, **caractérisé en ce que** la première barre de serrage (10, 12), la seconde barre de serrage (10, 12) et/ou la barre de scellage (11) et/ou une butée correspondante sont montées de manière élastique.

8. Procédé selon l'une des revendications 4 à 6, **caractérisé en ce que** la première barre de serrage (10, 12), la seconde barre de serrage (10, 12) et/ou la barre de scellage (11) et/ou une butée correspondante sont montées de manière rigide.

9. Procédé selon l'une des revendications 4 à 8, **caractérisé en ce que** la barre de scellage (11) et la première et/ou seconde barre de serrage (10, 12) peuvent être abaissées et/ou soulevées conjointement.

10. Procédé selon l'une des revendications 4 à 8, **caractérisé en ce que** la barre de scellage (11) est soulevée avant la première et/ou seconde barre de serrage (10, 12).

11. Dispositif pour emballer des produits (28) dans des sachets (26), avec un couvercle (5) qui forme avec une partie inférieure (25) une chambre (4), et avec une barre de scellage (11) pour sceller le sachet (26),
étant précisé qu'il est prévu au moins une première barre de serrage (10, 12) qui est conçue de telle sorte que le sachet (26) puisse être serré pendant le scellage,
**caractérisé en ce qu'**une première lame (19) est apte à être abaissée et soulevée avec le couvercle (5) en vue de fendre le sachet (26).

12. Dispositif selon la revendication 11, **caractérisé en ce qu'**il est prévu une seconde barre de serrage (10, 12), étant précisé que la barre de scellage (11) est disposée entre la première et seconde barre de serrage (10, 12).

13. Dispositif selon la revendication 11 ou 12, **caractérisé en ce qu'**une seconde lame (21) est apte à être abaissée et soulevée avec la première et/ou seconde barre de serrage (10, 12) et la barre de scellage (11).
